Europäisches Patentamt

European Patent Office

Office européen des brevets

(19)

(11) Veröffentlichungsnummer: **0 160 990**
**B1**

(12) **EUROPÄISCHE PATENTSCHRIFT**

(45) Veröffentlichungstag der Patentschrift: **16.01.91**

(51) Int. Cl.⁵: **H 04 B 5/00**

(21) Anmeldenummer: **85105672.1**

(22) Anmeldetag: **09.05.85**

(54) Induktive Energie- und Datenübertragung.

(30) Priorität: **11.05.84 DE 3417455**

(43) Veröffentlichungstag der Anmeldung:
**13.11.85 Patentblatt 85/46**

(45) Bekanntmachung des Hinweises auf die
Patenterteilung:
**16.01.91 Patentblatt 91/03**

(84) Benannte Vertragsstaaten:
**GB SE**

(56) Entgegenhaltungen:
**EP-A-0 011 810**
**DE-A-2 339 850**
**DE-A-3 019 124**
**GB-A-2 129 138**

(73) Patentinhaber: **TELEFUNKEN SYSTEMTECHNIK GMBH**
**Sedanstrasse 10**
**W-7900 Ulm (Donau) (DE)**

(72) Erfinder: **Wilke, Konrad, Dr.-Ing.**
**Wiesenweg 12**
**D-2107 Rosengarten (DE)**
Erfinder: **Schröder, Michael, Dipl.-Ing.**
**Schulweg 10**
**D-2086 Ellerau (DE)**
Erfinder: **Sterzenbach, Michael, Dipl.-Ing.**
**Graupferdsweg 11**
**D-2970 Emden (DE)**

(74) Vertreter: **Schulze, Harald Rudolf, Dipl.-Ing. et al**
**TELEFUNKEN SYSTEMTECHNIK GMBH**
**Sedanstrasse 10**
**D-7900 Ulm (DE)**

Courier Press, Leamington Spa, England.

## Beschreibung

Die Erfindung betrifft eine Einrichtung zur induktiven Energie- und Datenübertragung gemäß dem Oberbegriff des Anspruchs 1.

Aus der GB—A—2129138 ist eine Anordnung zur induktiven Energie- und Datenübertragung bekannt, bei der eine Versorgungsspannung und Informationssignale über einen Übertrager übertragen werden. Auf der Sekundärseite des Übertragers ist ein Netzgerät und als Übertrager sind Spulen vorgesehen. Es erfolgt eine Gleichrichtung der übertragenen Wechselspannungen, eine Umformung auf die richtige Betriebsgleichspannung, und eine Übertragung von Informationssignalen.

Weiterhin ist in der DE—A—3019124 eine Schaltungsanordnung beschrieben, bei der ein Signalsender und ein Signalempfänger mittels jeweils einer um ein Rohrstück eines eisernen Rohrnetzes als Spulenkern gewickelten Spule miteinander über das damit im Rohrnetz erzeugte Magnetfeld gekoppelt sind. Bei den Spulen kann es sich um über die Rohrstücke geschobene Torrid-Spulen handeln. Verwendung findet die Schaltungsanordnung bei in Gebäuden schleifenförmig installierten, metallischen Rohrnetzen zur elektrischen Signalübertragung, zur elektrischen Signalübertragung zwischen einem Heizungssteuergerät und elektrisch steuerbaren oder regelbaren Heizkörperventilen, zur elektrischen Signalübertragung einer Einbruch-Alarmanlage und in Verbindung mit Personen-Rufanlagen.

Für die Überwachung von langgestreckten Strukturen, als Beispiel sei hier ein Rohrstrang genannt, der von einem Schiff zum Meeresboden führt, wobei die Gesamtanordnung zur Förderung von Kohlenwasserstoffen oder Mineralien dienen kann, sind zahlreiche Meßstationen erforderlich. Mit ihnen werden, insbesondere bei großen Wassertiefen, die Richtung des Rohrstranges und gegebenenfalls die mechanischen Spannungsbeanspruchungen in bestimmten Rohrabschnitten ermittelt. Die Meßstationen können dabei einzeln über Kabel mit einer Zentralstation verbunden sein oder zur Einsparung von Verkabelungskosten an ein gemeinsames Kabel angeschlossen werden, über das Energie und Befehle zu den Einzelstationen übermittelt werden (vergleiche Druckschrift der Firma "SPERRY", Publ. No. N 510—2M/AA/1.76). Für Anordnungen dieser Art bringen die elektrischen Verbindungen, die an jeder einzelnen Meßstation erforderlich sind, eine erhebliche Verringerung der Betriebssicherheit mit sich.

Schießlich ist in der deutschen Patentanmeldung P 34 02 386.0 der Vorschlag gemacht worden, die Energie- und Datenübertragung dadurch sicherer zu machen, daß ein steckbarer Übertrager eingesetzt wird, dessen Stecker- und Steckbuchsenteil aus Dynamoblechen aufgebaut und mit magnetisch getrennten Spulen versehen ist. Hiermit ist eine sichere, vom Zustand metallischer Kontaktflächen unabhängige Übertragung möglich.

Aufagabe der Erfindung ist es, die Daten- und Energieübertragung entlang eines durch nicht mechanische Verbindungen erstellten Rohrstranges oder nur einer mechanischen Verbindung bei mindestens gleicher Sicherheit weiter zu vereinfachen.

Diese Aufgabe wird mit Hilfe der im Kennzeichen des Anspruchs 1 angegebenen Merkmale gelöst.

Mit dieser induktiven Übertragung wird erreicht, daß schon mit dem Zusammenstecken der einzelnen Rohrstücke zu einer Rohrleitung die Übertragungsleitung für Daten und Energie aufgebaut und mit dem ohnehin an den Kupplungsstellen vorhandenen Verriegelungselementen gesichert wird. Im Gegensatz zu der bekannten Anordnung ist eine radiale Ausrichtung nicht erforderlich.

In der Zeichnung ist ein Ausführungsbeispiel nach der Erfindung dargestellt. Darin zeigt

Fig. 1 eine Schaltungsanordnung für eine induktive Datenübertragung;

Fig. 2 eine Rohrkupplung mit den Übertragerelementen.

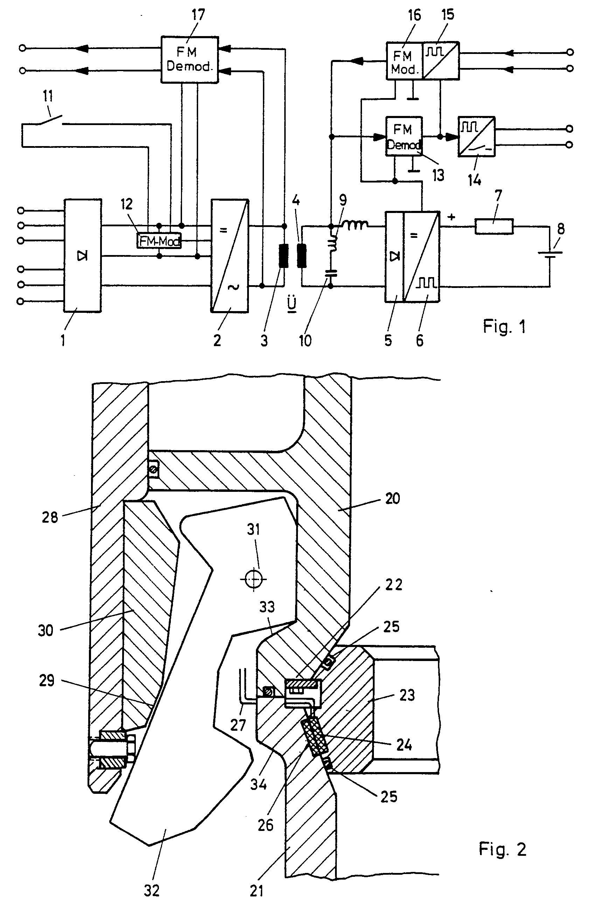

Aus der Schaltungsanordnung nach Fig. 1 kann entnommen werden, daß eine dreiphasige Wechselspannung, die einem Transformator entnommen wird, in einem Block 1 gleichgerichtet und dann einem Wechselrichter 2 zugeführt wird. Die Frequenz des Wechselrichters wird so gewählt, daß bei ausreichender übertragener Leistung die Verluste minimal sind. Die Frequenz kann beispielsweise 16 1/3 Hz betragen. Mit dem Ausgang des Wechselrichters ist die Primärwicklung 3 eines Übertragers Ü verbunden. Die der Sekundärwicklung 4 des Übertragers entnommene Wechselspannung wird in einem Ausgangsgleichrichter 5 in eine Gleichspannung umgewandelt, die in einem weiteren Block 6 auf die Batteriespannung umgeformt wird. Eine Konstantstromschaltung Block 7 sorgt für einen gleichbleibenden Ladestrom der Batterie 8. Zur Blindstromkompensation ist der Sekundärwicklung 4 des Übertragers Ü die Reihenschaltung einer Induktivität 9 und eines Kondensators 10 parallel zugeordnet. Dieser Energieübertragungsweg zur Stützung der Batterie 8 wird gleichzeitig zur Übertragung von Schaltsignalen in beiden Richtungen genutzt. Die Signalübertragung ist so ausgelegt, daß logische Zustände (beispielsweise eines potentialfreien Kontaktes) übertragen werden. Hierfür ist auf der Geberseite ein Einschaltkontakt 11 vorgesehen, dessen Schaltzustand über einen FM-Modulator 12, den Wechselrichter 2, den Übertrager Ü auf einen FM-Demodulator 13 auf der Empfängerseite übertragen wird, wo dann mittels einer Zeitsteuerung Block 14 der Ausgangskontakt entsprechend gelegt wird.

Um auf der Geberseite beispielsweise logische Schaltzustände kontrollieren zu können, ist eine aktive Rückmeldung vorgesehen. Mit dem Erscheinen eines Ausgangssignals am FM-Demodulator 13 wird eine Zeitsteuerung 15 angestoßen, wodurch nach vorbestimmter Zeit der logische Zustand auf einen FM-Modulator 16 gelangt.

Des Rückmeldesignal läuft wieder über den Übertrager Ü zu einem FM-Demodulator 17 und einen Rückmeldekontakt auf der Geberseite.

In Fig. 2 ist vergrößert die Verbindung des letzten Riserrohres 20 mit dem Endrohr 21 eines Wellhead gezeichnet. Mit einem im Flansch des Riserrohres 20 befestigten Ring 22 wird ein Übertragerring 23 vor dem Anschluß an das Rohr 21 festgelegt, der gleichzeitig Dichtring ist. Der Übertragerring 23 weist eine in Kunstharz vergossene Spule 24 und Dichtungsringe 25 auf. In die gegenüberliegende Fläche des Endrohres 21 ist eine ebenfalls vergossene Gegenspule 26 eingelegt. Leitungen 27 zur Daten- und Energieübertragung sind an die Spule 24 angeschlossen und durch die Flanschverbindung nach außen geführt. Nach Aufsetzen des Riserrohres 20 auf das Endrohr 21 wird wie üblich ein Rohrstück 28 hydraulisch nach unten bewegt und drückt mit einer keilförmigen Fläche 29 eines auswechselbaren Druckstückes 30 auf eine Gegenfläche eines um eine Achse 31 verschwenkbaren Riegels 32, der mit entsprechend ausgebildeten Flächen 33, 34 die Flansche der Rohre 20, 21 zusammenzieht. Druckstücke 30 und Riegel 32 sind mit Abständen gegeneinander und sternförmig um den Flansch herumverteilt angeordnet.

Im fertig montierten Zustand werden über außen entlang dem Riserrohr 20 verlaufende Leitung 27 Energie und Schaltbefehle auf die Spule 24 gegeben, induktiv auf die Gegenspule 26 übertragen und über das Endrohr 21 als Kernmaterial beispielsweise zu elektromagnetisch betätigten Ventilen zum Abschluß oder zum Öffnen einer Ölströmung durch das Riserrohr verwendet. Die Ausführung solcher Schaltbefehle wird, wie im Zusammenhang mit Fig. 1 beschrieben, ebenfalls induktiv über diese Übertragungsmittel zur Befehlsstelle zurückgemeldet.

## Patentansprüche

1. Einrichtung zur induktiven Energie- und Datenübertragung entlang einer aus einzelnen Rohrabschnitten (20, 21) zusammengesetzten Rohrleitung zwischen einem auf der Wasseroberfläche schwimmenden Fahrzeug und einer auf dem Meeresboden befindlichen Station, wobei vom Fahrzeug eine dreiphasige Versorgungsspannung über Gleich- und Wechselrichter (1, 2) und einen teilbaren bzw. steckbaren Übertrager (Ü) zur Stützung einer Batterie (8) in der Station und Schaltsignale in beiden Richtungen übertragen werden, wobei auf der Sekundärseite des Übertragers (Ü) in einem Netzgerät (5, 6) eine Umformung auf die Batteriespannung erfolgt, wobei in jedem Rohrkopf von benachbarten Rohrabschnitten (20, 21) jeweils gegenüberliegende Spule (24, 26) des Übertragers (Ü) rotations symmetrisch eingelassen ist, so daß eine radiale Ausrichtung nicht erforderlich ist, und wobei als Übertragerkern das Rohr (20, 21) selbst dient.

2. Einrichtung nach Anspruch 1, dadurch gekennzeichnet, daß eine Spule (26) des Übertragers (Ü) in einem Rohrflansch (34) eingelassen ist, und daß die bei miteinander verbundenen Rohrabschnitten (20, 21) gegenüberliegende Gegenspule (24) in einem an dem anderen Rohrabschnitt (20) befestigten Übertragerring (23) eingelassen ist.

3. Einrichtung nach Anspruch 2, dadurch gekennzeichnet, daß die induktive Übertragung über die Spulen (24, 26) durch die an sich bekannte Verriegelungsvorrichtung (30—34) für die Rohrabschnitte (20, 21) gesichert ist.

## Revendications

1. Dispositif de transmission inductive d'énergie et de données le long d'une conduite tubulaire composée de portions de tube individuelles (20, 21), entre un véhicule flottant à la surface de l'eau et une station se trouvant au fond de la mer, le véhicule transmettant une tension d'alimentation triphasée par l'intermédiaire de redresseur(s) et onduleur(s) (1, 2) et d'un transmetteur (Ü) pouvant être partagé ou embroché, pour soutenir une batterie (8) dans la station, et des signaux de commutation étant transmis dans les deux directions, une conversion à la tension de la batterie s'effectuant du côté secondaire de transmetteur (Ü), dans une unité d'alimentation (5, 6), une bobine (24, 26) du transmetteur (Ü) étant emboîtée, à chaque fois en vis-à-vis, dans chaque tête de tube de portions de tube voisines (20, 21), de sorte qu'il n'y a pas besoin d'orientation radiale, et que le tube (20, 21) sert lui-même de transmetteur.

2. Dispositif selon la revendication 1, caractérisé par le fait qu'une bobine (26) du transmetteur (Ü) est emboîtée dans un collet de tube (34), et par le fait que la bobine conjuguée (24), située en vis-à-vis dans le cas de portions de tube (21) assemblées l'une à l'autre, est emboîtée dans un anneau de transmetteur (23) fixé à l'autre portion de tube (20).

3. Dispositif selon la revendication 2, caractérisé par le fait que la transmission inductive via les bobines (24, 26) est assurée par le dispositif de verrouillage (30—34) connu en soi pour le verrouillage des portions de tube (20, 21).

## Claims

1. Equipment for the inductive transmission of energy and data along a pipe duct composed of individual pipe sections (20, 21) between a vessel floating on the water surface and a station disposed on the sea bed, wherein a three-phase supply voltage is transmitted from the vessel by way of rectifiers (1) and inverters (2) and a divisible or pluggable transmitter (Ü) for the support of a battery (8) in the station and switching signals are transmitted in both directions, wherein a conversion to the battery voltage takes place in a mains unit (5, 6) on the secondary side of the transmitter (Ü), wherein a respective oppositely disposed coil (24, 26) of the transmitter (Ü) is let in rotational symmetry into each pipe end of adjacent pipe sections (20, 21) so that a radial alignment is not required and wherein the pipe (20, 21) itself serves as transmitter core.

2. Equipment according to claim 1, characterised thereby, that a coil (26) of the transmitter (Ü) is let into a pipe flange (34) and that the countercoil (24), which lies opposite in the case of pipe sections (20, 21) being connected one with the other, is let into a transmitter ring (23), fastened at the outer pipe section (20).

3. Equipment according to claim 2, characterised thereby, that the inductive transmission by way of the coils (24, 26) is secured by the in itself known interlocking device (30 to 34) for the pipe sections (20, 21).

Fig. 1

Fig. 2